# EUROPÄISCHE PATENTSCHRIFT

(11) **EP 0 769 241 B1**
(45) Veröffentlichungstag und Bekanntmachung des Hinweises auf die Patenterteilung: **02.02.2000**
(21) Anmeldenummer: 96115898.7
(22) Anmeldetag: 04.10.1996
(51) Int. Cl.: A01C 5/06

(54) **Direktsämaschine**
Direct seed drill
Semoir direct

(30) Priorität: 20.10.1995 DE 19539147; 08.11.1995 DE 19541576
(43) Veröffentlichungstag der Anmeldung: 23.04.1997
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Wiemeyer, Benno, 49504 Lotte-Halen (DE)

(56) Entgegenhaltungen:
- DE-A- 3 223 376
- GB-A- 1 040 680
- US-A- 4 457 381
- US-A- 5 159 985

## Beschreibung

Die Erfindung betrifft eine Direktsämaschine gemäß Oberbegriff des Patentanspruches 1.

Eine derartige Direktsämaschine ist bereits durch das deutsche Patent DE-PS 32 23 376 bekannt.

In diesem Patent ist ein Säschar beschrieben, das den Verschleiß an der Aufreißspitze unter Vermeidung der Abbruchgefahr der Aufreißspitze erheblich reduziert. Dieses wird durch eine Aufpanzerung (Auftragsschweißung) der Aufreißspitze im vorderen Bereich erreicht.

Im praktischen Einsatz dieser derartig ausgebildeten Säschare hat sich jedoch gezeigt, daß diese Aufpanzerung zwar zu einer Erhöhung der Standzeit (Verschleißzeit) führt, aber diese Aufpanzerung jedoch zu ungleichmäßig von Schar zu Schar ist, d.h., der Verschleiß an den Scharen von Schar zu Schar ist nicht gleichmäßig. Dieses führt zu unterschiedlichen, unerwünschten Sätiefen der Schare. Zum Erreichen optimaler Ernteerträge ist es jedoch zwingend notwendig, daß sich die Sätiefe aller Säschare genau einstellen und vor allem auch einhalten läßt; d.h., daß die Saatgutablagetiefe für das Saatgut auch nach längerer Einsatzzeit bei allen Säscharen noch gleich ist.

Weiterhin ist zur Verschleißbegrenzung das allgemeine Aufbringen von Hartmetallplatten durch die genannte Patentschrift bekannt, der vorliegenden Erfindung aber liegt nun die Aufgabe zugrunde, einen speziell für den Einsatz an der Direktsämaschine entwickelten Aufreißmeißel zu schaffen, d.h. ein Optimum zwischen möglichst hoher Standzeit (Verschleißzeit) einerseits und hoher Bruchsicherheit andererseits zu erreichen.

Diese Aufgabe wird erfindungsgemäß dadurch gelöst, daß im unteren vorderen Bereich Aufreißmeißel angebracht sind, die an ihrer vorderen unteren Seite jeweils eine Hartmetallplatte aufweisen, die im wesentlichen aus einer versinterten Wolframcarbid-Kobalt-Verbindung besteht, mit Anteilen von 85% bis 90% Wolframcarbid und entsprechend 15% bis 10% Kobalt.
Infolge dieser Maßnahme wird auf einfachste und kostengünstigste Weise ein Aufreißmeißel geschaffen, der alle Voraussetzungen für eine gleichmäßige Saattiefe (Saatgutablage) bietet. Selbstverständlich sind die mit einer derartigen Hartmetallplatte versehenen Aufreißmeißel nicht ganz verschleißfrei, aber die Standzeiten aller Meißel einer Maschine sind wesentlich höher, wobei alle Meißel gleichmäßig verschleißen. Hierbei wird ein "millimetergenauer" Verschleiß von Meißel zu Meißel erreicht. Somit wird eine Kombination von Direktsaat-Meißelscharen mit individuellen Tiefenführungsrollen mit gemeinsamer bzw. gruppenweise Tiefeneinstellung der Meißelschare und mit vorn-unten an den vorzugsweise auswechselbaren Aufreißmeißeln angebrachten Hartmetallplatten geschaffen.

Durch die Ausbildung der Aufreißmeißel in erfindungsgemäßer Weise wird ein Optimum zwischen möglichst hoher Standzeit und einer großen Bruchsicherheit erreicht. Die erfindungsgemäße Ausbildung der Aufreißmeißel ist auf die maximal möglichen Arbeitsgeschwindigkeiten ausgerichtet, bei denen sich einerseits der minimalste Verschleiß einstellt, andererseits die Aufreißmeißel aber immer noch eine derartige Elastizität aufweisen, daß sie beim Auftreffen auf sich im Boden befindliche Steine o.a. harte Gegenstände nicht abbrechen. D.h., die Auswahl des Werkstoffes für die Hartmetallplatten stellt einen gelungenen Kompromiß zwischen der maximal möglichen Druckspannung (beeinflußt den Verschleiß) bei Einhaltung einer ausreichenden Biegespannung (beeinflußt die Elastizität) des Werkstoffes dar. Durch den über einen langen Zeitraum gleichbleibenden Verschleiß an allen Säscharen wird eine gleiche Ablagetiefe des Saatgutes durch alle Schare erreicht. Dieses führt zu optimalen Erträgen. Durch den gleichen Verschleiß an allen Scharen können diese gemeinsam verstellt werden, um den Verschleiß auszugleichen. Eine Einzelverstellung an jeden Schar ist nicht erforderlich.

In einer weiteren, erfindungsgemäßen Ausführungsform ist vorgesehen, daß die Säschare derart am Rahmen der Maschine angelenkt sind, daß die direkt nebeneinander angeordneten Säschare die Freiräume FA von mindestens 60 cm - vorzugsweise 75 cm - zueinander aufweisen und in der Höhe jeweils den Freiraum FB von mindestens 35 cm - vorzugsweise 50 cm - zum Maschinenrahmen aufweisen.

Hierdurch wird erreicht, daß sich die Direktsämaschine auch auf abgeernteten Ackerflächen mit großen Strohmassen erfolgreich einsetzen läßt, ohne daß es zu Verstopfungen durch die Ernterückstände kommt.

In einer weiteren, besonders bevorzugten Ausführungsform ist erfindungsgemäß vorgesehen, daß die Hartmetallplatte eine Breite von 10 mm bis 20 mm, vorzugsweise 15 mm, eine Dicke von 3 mm bis 8 mm, vorzugsweise 5 mm bis 6 mm und eine Höhe von 25 mm bis 40 mm, vorzugsweise 30 mm bis 40 mm aufweist. Durch die mit einer derartigen Hartemetallplatte versehenen Säschare ist es möglich, einen für die optimale Saatgutablage notwendigen, sauberen Säschlitz zu erzeugen, ohne daß es selbst bei auftretenden Verschleißerscheinungen zu einem unerwünschten Verschmieren der Seitenflächen der Säfurche kommt. Ein Verschmieren dieser Seitenflächen würde die für die Regulierung des Wasserhaushaltes und zum Wasserführen erforderlichen Poren verschließen, so daß die im Boden abgelegten Saatkörner schlechte Auflauf- und Keimbedingungen vorfinden würden. Dieses würde sich sehr nachteilig auf die Ernte des entsprechenden Saatgutes auswirken.

Dadurch, daß der Aufreißmeißel auf seiner Unterseite einen von der Hartmetallplatte ausgehenden Freiwinkel aufweist, wird dem unerwünschten, sich sehr negativ auf die Auflauf- und Keimbedingungen auswirkenden Verschmieren des Säschlitzes zusätzlich entgegengewirkt.

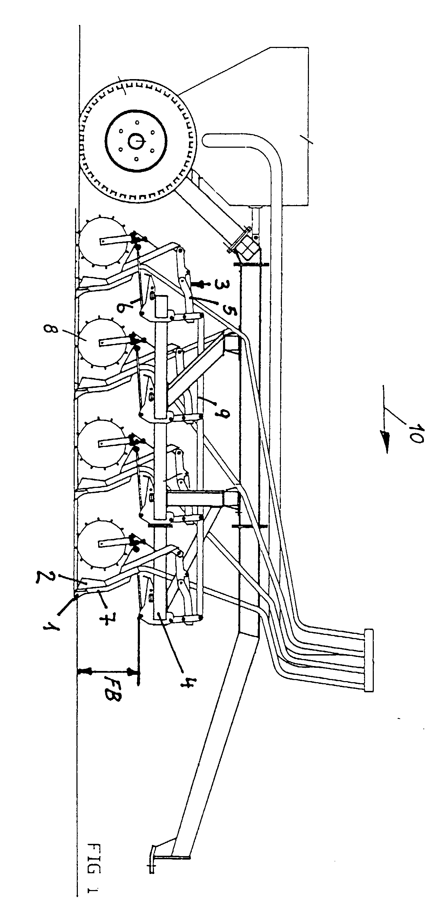

Weitere Einzelheiten der Erfindung sind den Unteransprüchen, der Beispielsbeschreibung und den Zeichnungen zu entnehmen. Hierbei zeigen
- Fig.1: eine in erfindungsgemäßer Weise ausgerüstete Direktsämaschine in Seitenansicht,

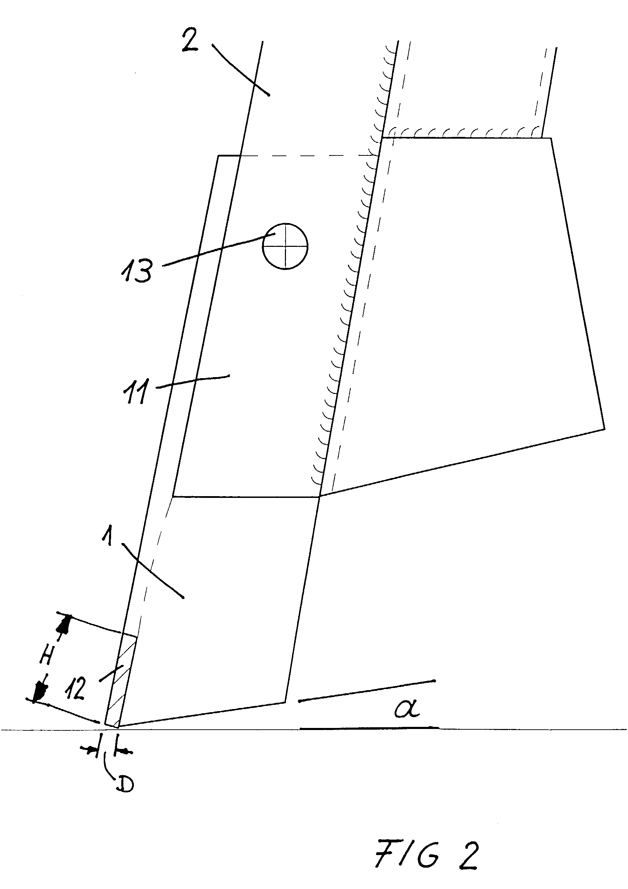

- Fig.2: Teilansicht des in erfindungsgemäßer Weise ausgerüsteten Säschares in der Seitenansicht,
- Fig.3: zwei der Säschare gemäß Fig.2 in der Ansicht von vorne, in einem anderen Maßstab,

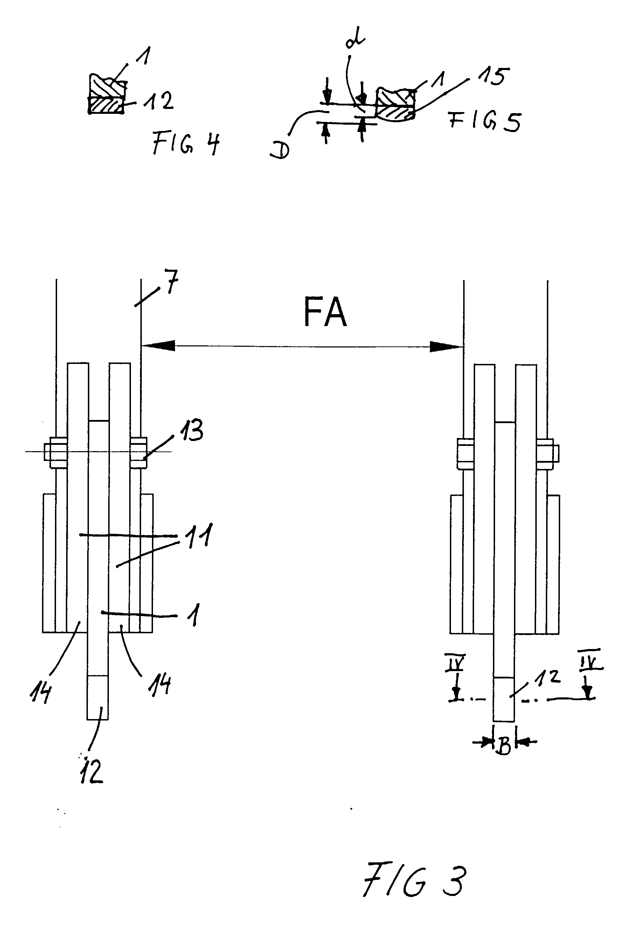

- Fig.4: die Hartmetallplatte in der Ansicht IV-IV,
- Fig.5: eine weitere Hartmetallplatte in der Ansicht IV-IV und
- Fig.6: die in erfindungsgemäßer Weise ausgerüstete Direktsämaschine in der Ansicht von oben.

Die mit dem Aufreißmeißel 1 ausgebildeten Meißelsäschare 2 sind über die parallelogrammartigen Halterungen 3 in aufrechter Ebene bewegbar auf Lücke zueinander und in vier Querreihen an dem Rahmen 4 der Direktsämaschine angeordnet. Die parallelogrammartige Halterung 3 weist die obere Strebe 5 und die untere Strebe 6 auf, die jeweils an ihrem vorderen Ende an dem Rahmen angelenkt sind und auf ihrer rückwärtigen Seite den Scharhalter 7 des Aufreißmeißels tragen. Hinter dem Meißelschar ist die Tiefenführungs- bzw. Druckrolle 8 angeordnet. Diese Rolle bestimmt die Eindringtiefe der Säschare in den Boden. Die parallelogrammartige Halterung ist an die zentrale Einstellvorrichtung 9 angeschlossen, über die die Arbeitstiefe (Sätiefe) der Säschare in den Boden einstellbar ist. Das Meißelsäschar weist auf seiner der Fahrtrichtung 10 zugewandten Seite den in der Halterung 11 befestigten, mit der Hartmetallplatte 12 versehenen Aufreißmeißel 1 auf. Der Aufreißmeißel wird mittels der Schraubverbindung 13 in der Meißelhalterung 11 befestigt. Diese Meißelhalterung besteht aus den beiden Seitenplatten 14, zwischen diesen Platten wird der Aufreißmeißel 1 befestigt und mittels der Schraube 13 gesichert. Wenn der Meißel durch den Boden gezogen wird, so legt er sich einfach nach hinten an. Nach Lösen der Schraube 13 läßt sich der Aufreißmeißel 1 nach vorne heraus nehmen.

Der Aufreißmeißel 1 besteht beispielsweise aus einem Stahl St 37 oder St 50, auf dem die Hartmetallplatte 12 auf seiner vorderen, unteren Seite aufgelötet ist, wobei der Aufreißmeißel 1 auf seiner Unterseite einen von der Hartmetallplatte 12 ausgehenden Freiwinkel α aufweist.

Die Hartmetallplatte 12 besteht im wesentlichen aus einer versinterten Wolframcarbid-Kobalt-Verbindung, mit Anteilen von 85% bis 90% Wolframcarbid und entsprechend 15% bis 10% Kobalt. Desweiteren weist die Hartmetallplatte eine Breite B von 10 bis 20 mm, vorzugsweise 15 mm, eine Dicke D von 3 bis 8 mm, vorzugsweise 5 bis 6 mm und eine Höhe H von 25 bis 50 mm, vorzugsweise 30 bis 40 mm auf. Die Hartmetallplatte 12 ist also als dünne Platte, deren Höhe großer als deren Breite ist, ausgebildet.

Die direkt nebeneinander angeordneten Säschare 2 weisen den Freiraum FA von mindestents 60 cm - vorzugsweise 75 cm - zueinander auf, so daß sich ein großer Durchgang zwischen direkt benachbarten Säscharen 2 ergibt.

Der große Freiraum FB von mindestens 35 cm - vorzugsweise 50 cm - zum Rahmen 4 bzw. zu Befestigungselementen des Säschares 2 garantiert einen genügenden Freiraum für evtl. auf dem Feld verbliebende große Massen von Ernterückständen.

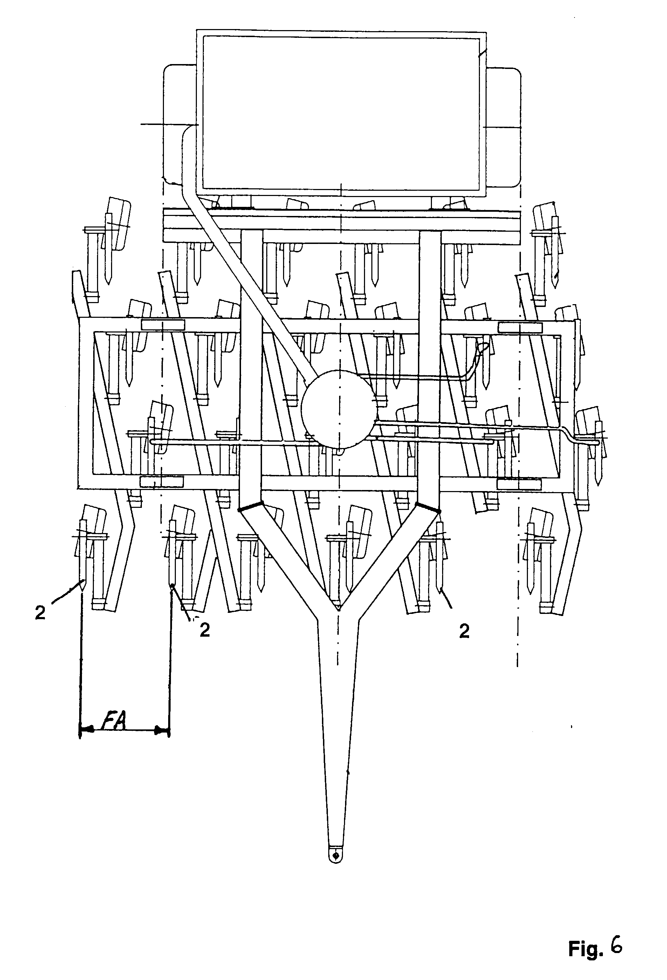

Die Hartmetallplatte 15 gemäß Fig.5 ist auf ihrer Vorderseite im Querschnitt konvex ausgebildet. Sie weist in der Mitte eine Dicke D von 5 bis 7 mm, vorzugsweise 6 mm und an den Seiten eine Dicke d von 2 bis 4 mm, vorzugsweise 3 mm auf.

## Patentansprüche

1. Direktsämaschine mit einer Anzahl von Säscharen, deren Arbeitstiefe (Sätiefe) gemeinsam und/oder gruppenweise einstellbar ist, wobei die Säschare mit einer max. Arbeitsgeschwindigkeit vₘₐₓ = ca. 15km/h, d.h. meist 3-4 m pro Sekunde, durch den Boden bewegt werden, dadurch gekennzeichnet, daß im unteren vorderen Bereich Aufreißmeißel (1) angebracht sind, die an ihrer vorderen unteren Seite jeweils eine Hartmetallplatte (12) aufweisen, die im wesentlichen aus einer versinterten Wolframcarbid-Kobalt-Verbindung besteht, mit Anteilen von 85% bis 90% Wolframcarbid und entsprechend 15% bis 10% Kobalt.

2. Direktsämaschine nach Anspruch 1, dadurch gekennzeichnet, daß die Säschare (2) derart am Rahmen (4) der Maschine angelenkt sind, daß die nebeneinander angeordneten Säschare (2) die Freiräume FA von mindestens 60 cm - vorzugsweise 75 cm zueinander aufweisen und in der Höhe jeweils den Freiraum FB von mindestens 35 cm - vorzugsweise 50 cm aufweisen.

3. Direktsämaschine nach einem oder mehreren der vorstehenden Ansprüche, dadurch gekennzeichnet, daß die Hartmetallplatte (12) eine Breite von 10 mm bis 20 mm, vorzugsweise 15 mm, eine Dicke von 3 mm bis 8 mm, vorzugsweise 5 mm bis 6 mm und eine Höhe von 25 mm bis 50 mm, vorzugsweise 30 mm bis 40 mm aufweist.

4. Direktsämaschine nach einem oder mehreren der vorstehenden Ansprüche, dadurch gekennzeichnet, daß die aufrechte Vorderseite der Hartmetallplatte (12) im Querschnitt konvex ausgebildet ist.

5. Direktsämaschine nach Anspruch 4, dadurch gekennzeichnet, daß die Dicke der Hartmetallplatte in der Mitte 5 mm bis 7 mm, vorzugsweise 6 mm und an den Seiten 2 mm bis 4 mm, vorzugsweise 3 mm beträgt.

6. Direktsämaschine nach einem oder mehreren der vorstehenden Ansprüche, dadurch gekennzeichnet, daß die Hartmetallplatte (12) als dünne Platte ausgebildet ist, deren Höhe größer als deren Breite ist.

7. Direktsämaschine nach einem oder mehreren der vorstehenden Ansprüche, dadurch gekennzeichnet, daß der Aufreißmeißel (1) auf seiner Unterseite einen von der Hartmetallplatte ausgehenden Freiwinkel α aufweist.

## Claims

1. Direct seed drill, having a number of sowing coulters, the working depth (sowing depth) of which is adjustable jointly and/or in groups, the sowing coulters being moved through the ground at a maximum operational speed of Vₘₐₓ = approximately 15 km/h. i.e. mainly 3 - 4 m per second, characterised in that chisel-like scarifiers (1) are mounted in the lower front region and each have at their lower front side a hard metal plate (12), which is substantially formed from a sintered compound of tungsten carbide and cobalt having proportions of between 85% and 90% tungsten carbide and accordingly between 15% and 10% cobalt.

2. Direct seed drill according to claim 1, characterised in that the sowing coulters (2) are pivotally mounted on the frame (4) of the drill in such a manner that the sowing coulters (2), which are disposed adjacent each other, have the free spaces FA of at least 60 cm, preferably 75 cm, from each other, each sowing coulter being provided vertically with the free space FB of at least 35 cm, preferably 50 cm.

3. Direct seed drill according to one or more of the preceding claims, characterised in that the hard metal plate (12) has a width of between 10 mm and 20 mm, preferably 15 mm, a thickness of between 3 mm and 8 mm, preferably between 5 mm and 6 mm, and a height of between 25 mm and 50 mm, preferably between 30 mm and 40 mm.

4. Direct seed drill according to one or more of the preceding claims, characterised in that the upwardly extending front side of the hard metal plate (12) has a convex cross-section.

5. Direct seed drill according to one or more of the preceding claims, characterised in that the thickness at the centre is between 5 mm and 7 mm, preferably 6 mm, and the thickness at the sides is between 2 mm and 4 mm, preferably 3 mm.

6. Direct seed drill according to one or more of the preceding claims, characterised in that the hard metal plate (12) is a thin plate, the height of which is greater than its width.

7. Direct seed drill according to one or more of the preceding claims, characterised in that the chisel-like scarifier (1) is provided, on its underside, with a clearance angle α, which extends from the hard metal plate.

## Revendications

1. Semoir direct comportant un certain nombre de socs de semoir dont la profondeur de travail (profondeur d'ensemencement) se règle globalement et/ou en groupe, les socs de semoir étant déplacés à travers le sol à une vitesse de travail maximale Vₘₐₓ = environ 15 km/h, c'est-à-dire 3-4 m par seconde,
caractérisé en ce que
dans la zone avant inférieure se trouvent les coultres défonceurs (1) dont les côtés inférieurs avant comportent chacun une plaque de métal dur (12) réalisée essentiellement en carbure de tungstène-cobalt, fritté, avec des teneurs de 85 % à 90 % de carbure de tungstène et, de façon correspondante, entre 15 % et 10 % de cobalt.

2. Semoir direct selon la revendication 1,
caractérisé en ce que
les socs de semoir (2) sont articulés au châssis (4) de la machine pour que les socs de semoir (2), juxtaposés, présentent entre eux des espaces libres FA d'au moins 60 cm et de préférence 75 cm, respectivement, et
la hauteur des espaces libres FB est d'au moins 35 cm et de préférence de 50 cm.

3. Semoir direct selon l'une quelconque des revendications précédentes,
caractérisé en ce que
la plaque de métal dur (12) a une largeur comprise entre 10 mm et 20 mm, de préférence égale à 15 mm, une épaisseur comprise entre 3 et 8 mm, de préférence égale à 5-6 mm et une hauteur de 25 mm-50 mm, de préférence égale à 30 mm ou 40 mm.

4. Semoir direct selon l'une ou plusieurs des revendications précédentes,
caractérisé en ce que
le côté avant montant de la plaque de métal dur (12) a une section convexe.

5. Semoir direct selon l'une ou plusieurs des revendications précédentes,
caractérisé en ce que l'épaisseur au milieu est comprise entre 5 mm et 7 mm, de préférence égale à 6 mm et, au niveau des côtés, elle est de 2 à 4 mm, de préférence égale à 3 mm.

6. Semoir direct selon l'une quelconque des revendications précédentes,
caractérisé en ce que
la plaque de métal dur (12) est en forme de plaque mince de hauteur supérieure à sa largeur.

7. Semoir direct selon l'une ou plusieurs des revendications précédentes,
caractérisé en ce que le coultre défonceur (1) présente un angle de dégagement (α) sur son côté inférieur, à partir de la plaque de métal dur.
